Europäisches Patentamt

European Patent Office

Office européen des brevets

(11) Publication number: **0 200 836**
A2

# (12) EUROPEAN PATENT APPLICATION

(21) Application number: **85309192.4**

(22) Date of filing: **17.12.85**

(51) Int. Cl.⁴: **H 03 H 7/01**

(30) Priority: **10.05.85 US 733291**

(43) Date of publication of application: **12.11.86**
Bulletin 86/46

(84) Designated Contracting States: **AT BE CH DE FR GB IT LI LU NL SE**

(71) Applicant: **Litton Systems, Inc., 360 North Crescent Drive, Beverly Hills California 90210 (US)**

(72) Inventor: **Pavlath, George A., 3513 Calle Quebracho, Thousand Oaks California 91360 (US)**

(74) Representative: **Rushton, Ronald et al, SOMMERVILLE & RUSHTON 11 Holywell Hill, St. Albans Hertfordshire AL1 1EZ (GB)**

(54) Channelized fiber optic receiver.

(57) A receiver includes apparatus for modulating a signal onto an optical carrier. A plurality of fiber optic filters analyses the modulated carrier. Each of the filters has a unique, predetermined center frequency and bandwidth. The filters are arranged to provide a predetermined continuous receiver frequency range.

EP 0 200 836 A2

-1-

# CHANNELIZED FIBER OPTIC RECEIVER

## Background of the Invention

The present invention relates to communication systems. More particularly, this invention pertains to a channelized receiver that employs optical signal analysis.

A favored architecture for use in a front end receiver (i.e. a receiver for analyzing incoming signals and determining their frequency content) is the channelized type. Such a receiver is especially useful in electronic warfare applications as it inherently possesses certain significant advantages not found in a conventional spectrum analyzer. These advantages arise, in part, from the parallel signal processing employed in the channelized receiver and missing from the spectrum analyzer.

In a typical channelized receiver, a plurality of filters, each having a unique center frequency, is arranged to "cover" a preselected signal spectrum. This spectrum is centered about the signal carrier with bandwidth determined by the (AM) modulation frequency or maximum predicted frequency range (FM modulation). In a 1-to-2 GHz receiver of this type that includes, for example, 100 channels of 10 MHz bandwidth (3 dB) each, it can be seen that signal power at 1.452 GHz will be detected in the 45th serial channel.

A type of filter that has been utilized on channelized receivers is the tapped delay line. This filter includes an electromagnetic transmission medium, such as a traveling wave tube, waveguide, microstrip, etc. having a plurality of "taps" arranged along its length. The taps serve as means for extracting or sampling the differing phases of the traveling microwave energy. Energy from the multiple taps is then summed and, by means of an appropriate transducer, converted into an electrical signal. The resulting electrical signal is representative of the portion of the power spectrum of the traveling electromagnetic energy located within the passband of the filter. As is well known, the passband of the tapped delay line is a function of both the delay (length) between, and the number of, taps of the transmission medium. Symbolically:

$$f_c \sim 1/\tau$$

-2-

$$BW \sim 1/N$$

where:

$f_c$ = center frequency of filter;

BW = 3 dB bandwidth of filter;

$\tau$ = delay between taps;

N = number of taps;

and:

$$t = L/C_f$$
$$C_f = C_0/n$$

where:

L = distance between taps;

$C_0$ = free space speed of light;

$C_f$ = speed of light in medium; and

n = index of refraction of medium.

In the past, channelized receiver systems have operated primarily at microwave and millimeter wave frequencies. Thus, when tapped delay line filters have been employed, the delay lines have of necessity been implemented with surface acoustic wave (SAW) devices and discrete electronic components. While some success has been achieved, such receivers and filters have been of quite limited application as a result of demonstrated and undesirable third order intermodulation and triple transit errors.

Summary of the Invention

The present invention that provides an improved channelized receiver. The receiver includes apparatus for modulating a signal onto an optical carrier. The receiver further includes apparatus for analyzing the modulated carrier, the apparatus including a plurality of optical filters. Each of the optical filters is characterized by a unique, predetermined center frequency and a bandwidth. The filters are arranged to provide a predetermined continuous receiver frequency range.

A greater appreciation for the invention will be had from the detailed description that follows. This description accompanies an illustrative set of drawing figures. In the written description and in the drawings, numerals refer to the various features of the invention, like numerals referring to like features throughout.

Brief Description of the Drawings

Figure 1 illustrates the general arrangement of the fiber optic channelized receiver of the invention;

Figure 2 is a schematic diagram of a fiber optic tapped delay line filter for use in the invention;

Figures 3(a) and 3(b) illustrate the mechanical arrangements of half-coupler and macrobend fiber optic tapped delay line filters respectively; and

Figures 4(a), 4(b) and 4(c) illustrate the serial, parallel and hybrid filter configurations, respectively, of the fiber optic channelized receiver of the invention.

Description of the Preferred Embodiment

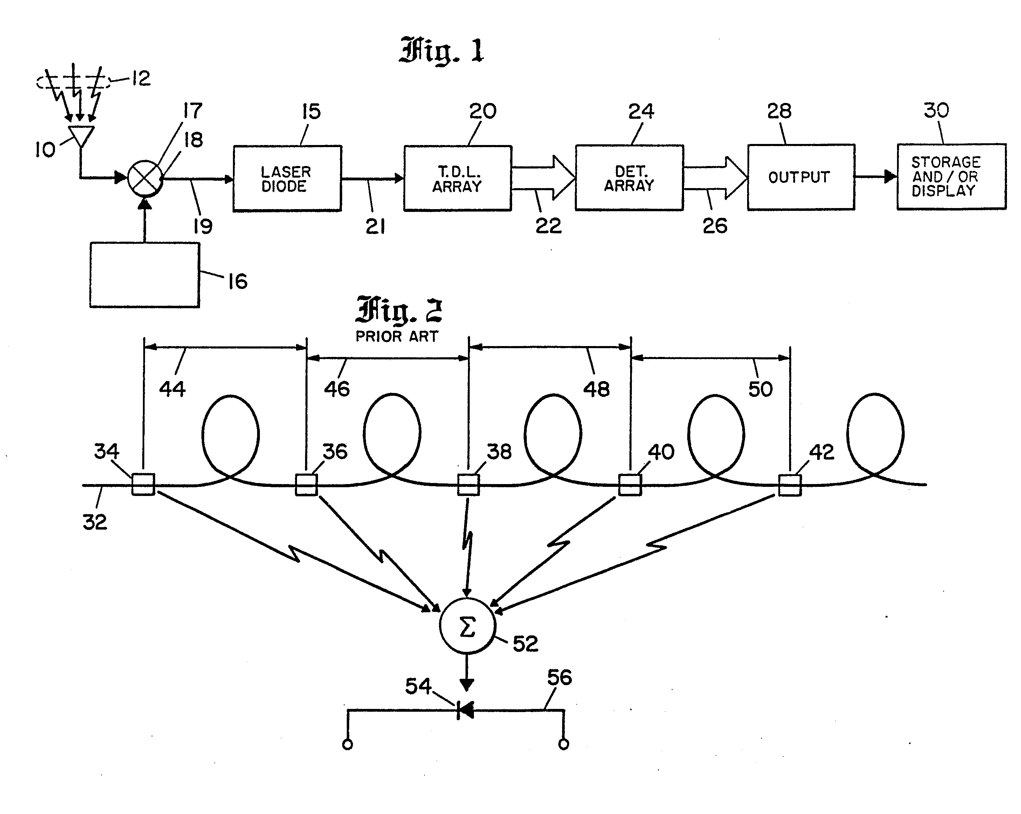

Referring to Figure 1, the receiver includes an antenna 10 or other conventional apparatus responsive to free space microwave energy. "Incoming" microwave signals 12 are received by an antenna 10 and conducted to a microwave frequency-band mixer 17. The mixer 17, which accepts a microwave frequency-band reference signal from a local oscillator 16 as an input, serves to modulate the microwave carrier of the detected microwave signals 12 down into the modulation bandwidth of a laser diode 15. Thus, at an output port 18 of the mixer 17 there is produced a baseband modulated microwave band signal 19.

The signal 19 intensity-modulates a laser diode 15 whereby the laser diode 15 provides as its output an incoherent , intensity-modulated signal 21 that duplicates the modulation of the received microwave signals 12. Coherent light is not appropriate for tapped delay line use because errors may be introduced by interference between light waves from the multiple taps. The transmission of incoherent light permits the desirable simple signal addition of intensities employed in the invention.

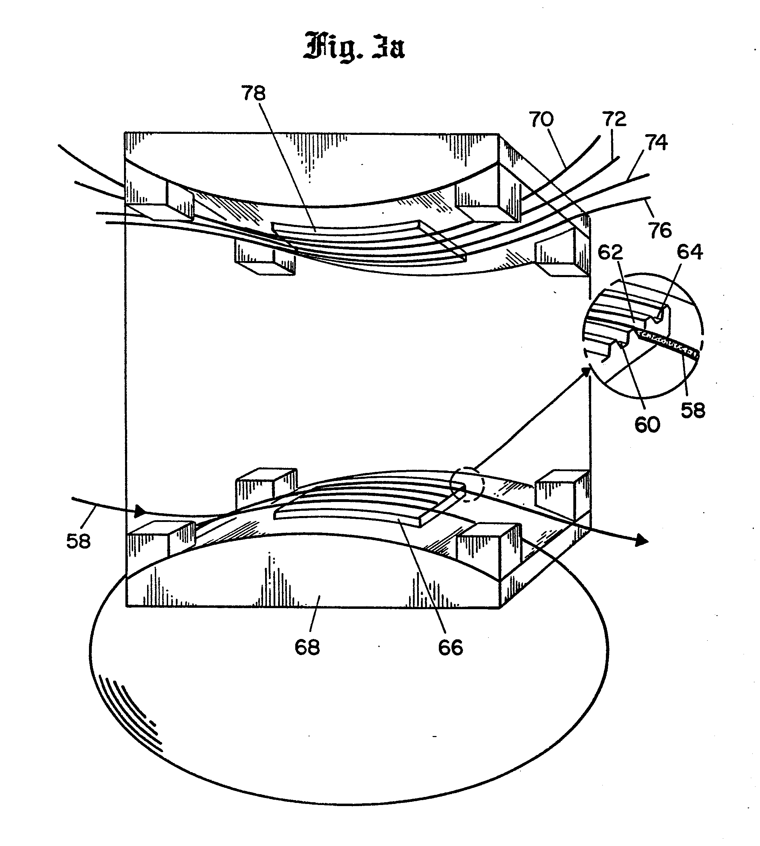

The signal 21 is applied to a fiber optic array 20 that comprises a plurality of filters of the tapped delay line type arranged into one of a number of embodiments. Each filter features fiber optic construction with an optical fiber providing, inter alia, the signal

-4-

transmission medium. A representative fiber optic tapped delay line filter is shown in detail in Figure 2.

Each of the tapped delay lines of the array 20 provides a plurality of optical signal outputs for combining and focusing onto a photodetector. Transmission from delay line to focusing means may be either contained or free space depending upon the means used for tapping the delay line fiber. The former transmission mode is associated with a half-coupler tap while the latter mode is provided by macrobending the transmission fiber. The mechanical structures of free space and contained (half-coupler) type tapped delay line filters are shown in detail in Figures 3(b) and 3(a) respectively.

Returning to Figure 1, it can be seen that the combined and focused outputs of the tapped delay line array 20, in parallel, comprise an optical output bus 22. This bus feeds the optical outputs of the plurality of tapped delay lines of the array 20 to a corresponding array of photodetectors 24. The individual photodetectors of the array 24 act as circuit elements that regulate current in a plurality of circuits comprising, in the aggregate, a current bus 26. This bus 26 is fed to a spectrum output means 28. The output means 28 is arranged to demodulate and convert the signals comprising the current bus 26, each of which is responsive to the amount of received signal in a preselected frequency channel, into an analytically useful profile of the spectrum of the detected microwave signals 12. This profile is transmitted to an appropriate storage/display means 30, selected in accordance with the anticipated modes of use of the channelized receiver.

Figure 2 is a schematic diagram of a representative fiber optic tapped delay line filter. Various portions of the filter are associated with the tapped delay line array 20, the photodetector array 24 and the output means 28. The specific association of each filter element will become clear from the preceding and following discussions.

The filter can be seen to include a conventional optical signal transmission fiber 32 comprising an inner doped core and surrounding cladding, neither of which can be seen from the present schematic representation. A plurality of taps 34, 36, 38, 40 and 42 are arranged along the length of fiber 32. The taps can be of either the contained or free-space transmission type. In accordance with the invention, the taps are separated by equal fiber lengths (1) and the tapped outputs applied to a common focusing output summing node 52. The summed outputs of the taps 34, 36, 38, 40 and 42 are focused by the node 52 onto a photodetector 54 that regulates current flow through an output circuit 56. The current provides an indication of the amount of received signal energy at the passband of the particular filter.

The fiber optic tapped delay line filter shown and described above is well known in the optical communications art. Extensive studies have included "Microwave-Frequency Response of an Optical-Fiber Delay-Line Filter" by S.A. Newton and P.S. Cross, Electronics Letters, Vol. 19, No. 13 (June 23, 1983), "Fiber-Optic Variable Delay Lines" by J.E. Bowers, S.A. Newton and H.J. Shaw, Electronics Letters, Vol. 18, No. 23, (November 11, 1982), "Filter Response of Single-Mode Fiber Recirculating Delay Lines" by J.E. Bowers, S.A. Newton, W.V. Sorin and H.J. Shaw, Electronic Letters, Vol. 18, No. 3 (February 4, 1982), "Optical Fiber V-groove Transversal Filter" by S.A. Newton, K.P. Jackson and H.J. Shaw, App. Phys. Letters, Vol. 43, No. 2 (July 15, 1983) and "Microbend Optical Fiber Tapped Delay Line for Gigahertz Signal Processing" by K.P. Jackson, J.E. Bowers, S.A. Newton and C.C. Cutler, App. Phys. Letters, Vol. 41, No. 2 (July 15, 1982).

It is generally understood that the design of the tapped delay line filter is characterized by the number and spacing of the taps along the delay line. The center frequency of a tapped delay line filter is proportional to the individual tap spacings while its bandwidth is inversely proportional to the number of taps. Thus, the tapped delay line configuration may be employed to fabricate a plurality of filters of preselected bandwidths and center frequencies. Such filters, when appropriately arranged into an array in accordance with the invention form an optical channelized receiver that not only avoids the significant operational disadvantages which result from third order intermodulation and triple transit error effects in lower-bandwidth systems but also offers the inherent advantage of a significantly higher bandwidth system. By utilizing optical-bandwidth data processing, the receiver of the present invention affords the capability of highly accurate assessment of a

-6-

substantially enhanced number of simultaneously-detected free space signals 12 of differing center frequencies.

Reference is now made to Figures 3(a) and 3(b) that disclose the basic mechanical structures of contained and free-space tapped delay line fiber-optic filters respectively for use in the present invention. The mechanical structures illustrated incorporate portions of the filter shown schematically in Figure 2.

The "contained" tapped delay line filter shown in Figure 3(a) is of the V-groove, half coupler type. A signal is applied to the tapped delay line by means of a single input optical fiber 58. The input fiber 58 is recirculated and bonded to adjacent grooves 60, 62, and 64 of an anisotropically etched silicon V-grooved wafer 66. The wafer 66 is mounted upon a curved quartz substrate base 68.

A plurality of taps are formed by arranging a plurality of output optical fibers 70, 72, 74, and 76 upon a matching V-groove wafer 78. Optical energy from locations spaced along the input fiber 58 is coupled into the output fibers 70, 72, 74, and 76 by means of the well-known evanescent field coupling that takes place between optical fibers whose cores are in close proximity. The evanescent field of the optical signal is exposed at a short (about 1mm) section of each input fiber turn by polishing the contacting surfaces of the input and output fibers to remove the cladding to within a few microns of the core.

The light coupled out of the spaced taps of the input fiber 58 is guided by the individual output fibers 70, 72, 74 and 76. The output fibers may be assembled into an array with spatially-correlated weightings, produced by selective intensity filtering, assigned to the light intensity transmitted therein. The outputs transmitted by the output fibers may then be focused onto a single detector for summation. By laterally adjusting the relative offset of the input and output fibers at their polished interface (i.e. the tap) the degree of signal coupling is adjusted. Translation of the entire array causes equal variations in the coupling at every tap. Uniformity of core-to-core spacing, which effects coupling uniformity, is a function of the precision of photolithograph employed in the fabrication of the V-grooved wafers 66 and 78.

-7-

Figure 3(b) illustrates the mechanical structure of a fiber optic tapped delay line filter of the macrobend or "free-space" type. Unlike the tapped delay line of Figure 3(a), the apparatus disclosed in Figure 3(b) does not utilize the coupling of evanescent fields to tap an input optical fiber 80. Rather the input fiber 80 is wrapped around a relatively large-diameter cylindrical core 84. An abrupt curvature discontinuity (i.e. a macrobend) is created at regularly-spaced segments of the input fiber 80 by locating a small-diameter tapping pin 86 at the otherwise-smooth surface of the core 84.

Tangential light transmissions from the interior of the input fiber 80 occur at each discontinuity in the curvature of the optical fiber wound about the core 84. The taps are submerged in a bath 88 of index matching fluid. Light transmitted tangentially from the taps impinges upon a series of lenses 90 that effect the imaging of the tap outputs onto a remote plane where the outputs may be weighted by spatial filtering methods. The weighted outputs may then be summed by a focusing lens 94 and applied to a detectors 96.

The operation of fiber optic tapped delay lines configured in accordance with the preceding Figures 3(a) and 3(b) as filters and related optical devices are discussed in "Fiber-Optic Delay Line Devices for Gigahertz Signal Processing" by S.A. Newton, K.P. Jackson, J.E. Bowers, C.C. Cutler and H.J. Shaw, Proceedings of IEEE International Conference on Acoustics, Speech and Signal Processing, pp.. 1204-1207 (April 1983).

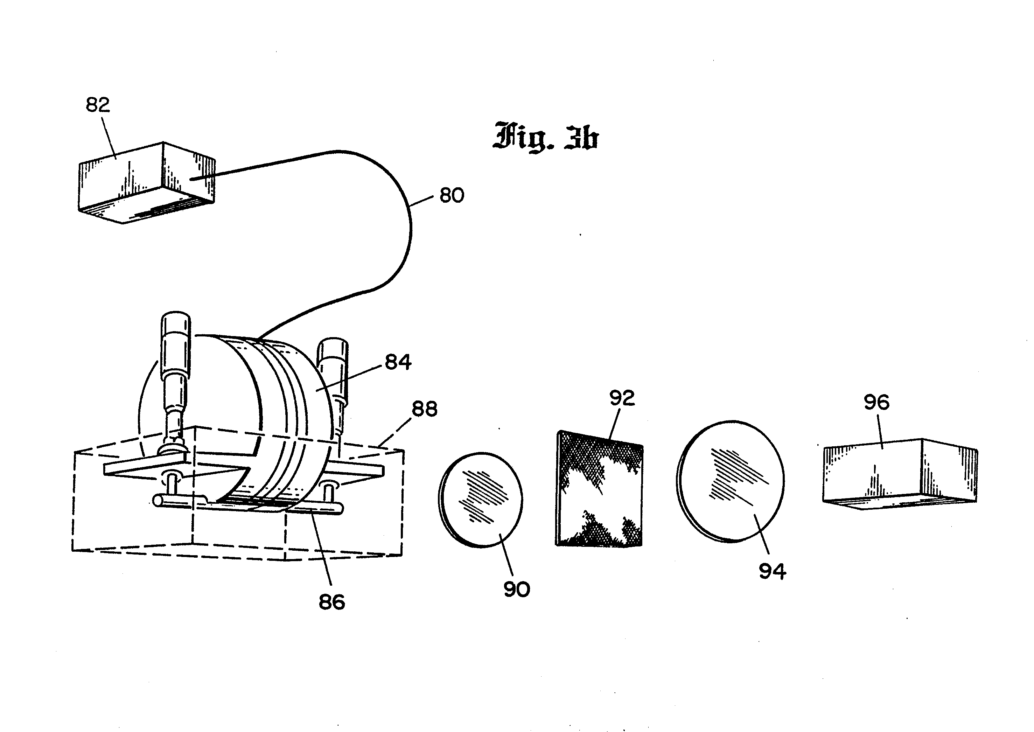

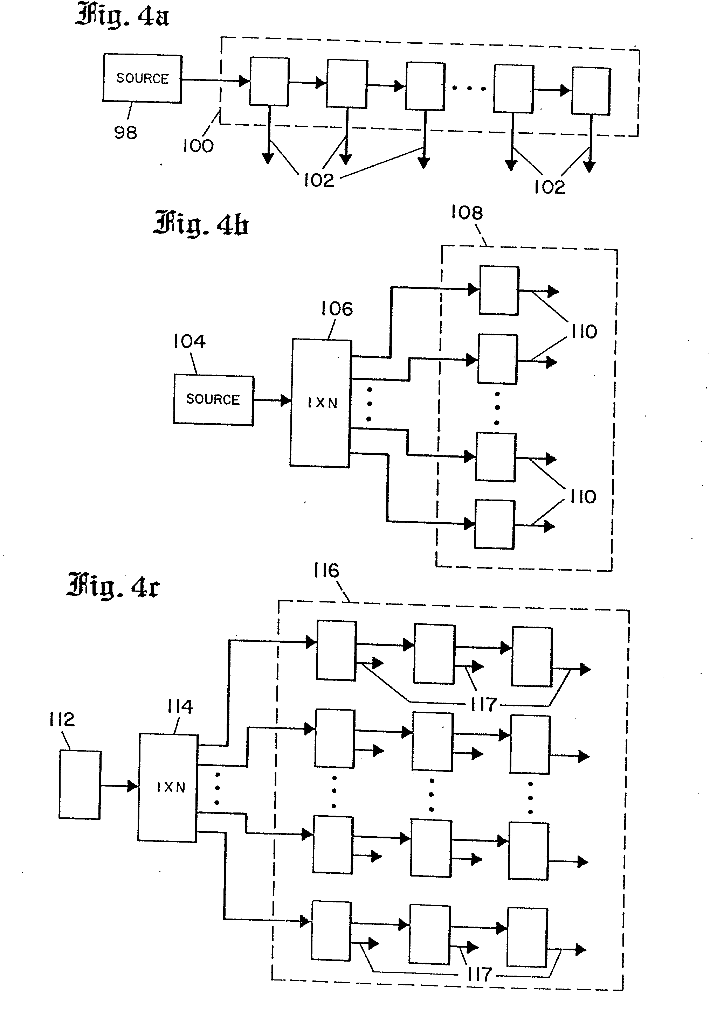

The channelized or front end receiver of Figure 1 may have a number of alternative system embodiments. Three embodiments, characterized generally in accordance with the geometry or architecture of the tapped delay line array 20, are the serial, parallel and hybrid embodiments shown in Figures 4(a), 4(b) and 4(c) respectively.

In Figure 4(a) a modulated source 98 represents the combination of elements shown in Figure 1, including the antenna 10, the microwave mixer 14, the local oscillator 16 and the laser diode 15, for providing optical-bandwidth energy to the tapped delay line array 20. The output of the source 98 is applied to a plurality of fiber optic tapped delay line filters grouped into a serial array 100. Each of the individual

-8-

filters of the array 100 comprises the grouping of a number of taps of preselected separation and weightings such that each of the optical outputs of output group 102 "covers" and thereby indicates the content of a portion of the potential input signal spectrum. Each of the outputs of the group 102 may represent the output of a dedicated optical summing node that is to be applied to a photodiode (not shown). The taps may be made in a single, modulated signal-carrying optical fiber; therefore, the embodiment of Figure 4(a) is of very simplified and easy-to-manufacture construction.

The parallel embodiment of Figure 4(b) is formed by applying a signal from a modulated source 104 to a 1xN coupler 106 prior to providing the coupler output to a plurality of fiber optic tapped delay line filters 108. Each filter of the array 108 comprises a single optical fiber including a preselected number, spacing and weighting of taps for effecting a corresponding preselected center frequency and bandwidth. The number of filters of the array 108, in conjunction with the individual filter parameters, determines the receiver's coverage spectrum. Once again, an output group 110 may comprise the outputs of a plurality of optical summing nodes. While the parallel filter array structure is somewhat more complex than the serial structure of Figure 4(a), the quality of signal detection is enhanced insofar as the small unintended signal losses that result from tap leakage are not additive as in the serial arrangement.

Figure 4(c) illustrates a receiver including a hybrid parallel and serial array of filters. As in the preceding embodiment, the output of a modulated source 112 is applied to a signal splitting optical coupler 114 before the resulting plurality of signals is applied to a corresponding plurality of parallel filter "strings" of the hybrid filter array 116. The receiver of Figure 4(c) represents a compromise between the serial and parallel architectures, offering the advantages of less mechanical complexity than the "pure" parallel array without the amount of unprocessed signal losses that characterize the single fiber, serial filter array.

The receiver described herein, by employing fiber optical elements and apparatus, is extremely wide-band, thereby enabling the user to detect and discriminate effectively between a large plurality of possible input frequencies. The large bandwidth further affords the opportunity to perform parallel signal processing, thereby increasing the speed of signal detection without the problems of, for example, third order intermodulation and triple transit error found in the prior art. Receivers configured in accordance with the invention enjoy the advantages that are inherent in fiber optic devices generally, including low power, ease of manufacture and simplicity of structure.

-10-

## CLAIMS

WHAT IS CLAIMED IS:

1.  A channelized receiver characterised by apparatus for modulating a signal onto an optical carrier; and means for analyzing the modulated carrier, including a plurality of optical filters, each of the filters being characterised by a predetermined center frequency and a bandwidth, the filters being arranged to provide a predetermined continuous range of frequencies.

2.  A receiver as defined in Claim 1 wherein each of the optical filters is an optical tapped delay line.

3.  A receiver as defined in Claim 2 wherein each of the filters further includes an optical fiber; a plurality of optical taps spaced along the fiber;and means for detecting the optical energy omitted from the taps.

4.  A received as defined in Claim 3 wherein the filters are arranged in series.

5.  A receiver as defined in Claim 3 wherein the filters comprise a parallel arrangement of a plurality of series of filters.

6.  A receiver as defined in Claim 3 wherein the filters are arranged in parallel.

# Fig. 1

LASER DIODE — 15

T.D.L. ARRAY — 20

DET. ARRAY — 24

OUTPUT — 28

STORAGE AND / OR DISPLAY — 30

# Fig. 2
PRIOR ART

1/4

0200836

## Fig. 3a

Fig. 3b

4/4.

**Fig. 4a**

**Fig. 4b**

**Fig. 4c**